# EUROPEAN PATENT APPLICATION

(11) **EP 4 696 438 A1**
(43) Date of publication of application: **18.02.2026**
(21) Application number: 24919153.7
(22) Date of filing: 12.09.2024
(51) Int. Cl.: B23C 5/20, B23C 5/06

(54) **CUTTING INSERT AND CUTTING TOOL**

(30) Priority: 25.06.2024 JP 2024101685
(71) Applicant: DIJET INDUSTRIAL CO., LTD., Hirano-ku Osaka-shi Osaka 547-0002 (JP)
(72) Inventor: HAYAMIZU, Takuya, Osaka-shi, Osaka 5470002 (JP); TSUMAGARI, Tatsuya, Osaka-shi, Osaka 5470002 (JP)
(74) Representative: Glawe, Delfs, Moll
(86) International application number: PCT/JP2024/032657
(87) International publication number: WO 2026/004158

(57) **Abstract**

In a cutting insert 10 having a substantially pentagonal upper surface 11, a substantially pentagonal lower surface 12, and a side surface 13 between the upper surface and the lower surface, a flat cutting edge 14 is formed at each of the corners in the upper surface and the lower surface that intersect with the side surface; a first main cutting edge 15 and a second main cutting edge 16 are formed between the corners in correspondence with the flat cutting edges, an angle θ1 formed by the flat cutting edge and the first main cutting edge is in the range from 15° to 30°, and an angle θ2 formed by the flat cutting edge and the second main cutting edge is in the range from 40° to 50°.

## Description

### TECHNICAL FIELD

The present teaching relates to a cutting insert and a cutting tool in which the cutting insert is detachably attached to an insert pocket of a tool body. In particular, the present teaching is characterized by stably performing high-depth cutting processing with deep slits in the axial direction as well as high-feed cutting processing, in cutting a workpiece with a cutting tool in which a cutting insert is attached to an insert pocket of a tool body.

### BACKGROUND ART

Conventionally, cutting processing of a workpiece has been performed using a cutting tool in which a cutting insert is attached to an insert pocket of a tool body.

Here, as the cutting insert mentioned above, for example, as shown in Patent Documents 1 to 4 and other documents, a cutting insert is used which has a polygonal upper surface, a polygonal lower surface, and a side surface between the upper surface and the lower surface. In the cutting insert, a flat cutting edge is formed at each corner in an upper surface intersection where the upper surface and the side surface intersect with each other and a lower surface intersection where the lower surface and the side surface intersect with each other, and a main cutting edge is formed between the corners in correspondence with the flat cutting edges.

In a cutting tool in which the cutting insert as described above is attached to an insert pocket thereof, the feed speed in the surface direction is increased to perform high-feed processing, and thus, adjustments are made to incline the ridge of the main cutting edge of the cutting insert so that the axial rake angle of the main cutting edge is a positive angle, or to reduce the angle of the main cutting edge relative to the flat cutting edge.

However, in the case of performing high-depth cutting processing with deep slits in the axial direction using a cutting tool in which the axial rake angle of the main cutting edge is adjusted to be a positive angle, and the angle of the main cutting edge relative to the flat cutting edge is reduced, there arise problems such as damage of the main cutting edge caused by an increased load applied to the main cutting edge.

### CITATION LIST

### PATENT DOCUMENTS

Patent Document 1: Japanese Patent No. 5357963
Patent Document 2: Japanese Patent No. 5369185
Patent Document 3: Japanese Patent No. 5441615
Patent Document 4: Japanese Patent No. 5469172

### SUMMARY OF INVENTION

### TECHNICAL PROBLEM

It is therefore an object of the present teaching to solve problems as described above in the case of performing cutting processing with a cutting tool in which a cutting insert is attached to an insert pocket of a tool body. In the cutting processing, a cutting insert is used, in which a flat cutting edge is formed at each of the corners in an upper surface intersection where a polygonal upper surface and a side surface intersect with each other and a lower surface intersection where a polygonal lower surface and the side surface intersect with each other, and a main cutting edge is formed in correspondence with the flat cutting edges.

That is, an object of the present teaching is to stably perform high-depth cutting processing with deep slits in the axial direction as well as high-feed cutting processing at high feed speed in the surface direction, in cutting a workpiece with the cutting tool as described above.

### SOLUTION TO PROBLEM

To solve the problems described above, in a cutting insert according to the present teaching including a substantially pentagonal upper surface, a substantially pentagonal lower surface, and a side surface between the upper surface and the lower surface, a flat cutting edge is formed at each of the corners in the upper surface and the lower surface that intersect with the side surface; and a first main cutting edge and a second main cutting edge are formed between the corners and continuous with the flat cutting edge, wherein an angle θ1 formed by the flat cutting edge and the first main cutting edge is smaller than an angle θ2 formed by the flat cutting edge and the second main cutting edge, the angle θ1 formed by the flat cutting edge and the first main cutting edge is in a range from 15° to 30°, and the angle θ2 formed by the flat cutting edge and the second main cutting edge is in a range from 40° to 50°.

In the case of cutting a workpiece with the flat cutting edge and the first main cutting edge of the cutting insert without cutting the workpiece with the second main cutting edge, since the angle θ1 formed by the flat cutting edge and the first main cutting edge is small, a cutting resistance to the workpiece is reduced so that high-feed cutting processing can be efficiently performed. On the other hand, in the case of cutting a workpiece with the flat cutting edge, the first main cutting edge, and the second main cutting edge, since the angle θ2 formed by the flat cutting edge and the second main cutting edge is larger than the angle θ1 formed by the flat cutting edge and the first main cutting edge, high-depth cutting processing can be efficiently performed with the second main cutting edge in performing cutting processing with deep slits in the axial direction.

Further, in the cutting insert according to the present teaching, the cutting insert includes a polygonal upper surface, a polygonal lower surface, and a side surface between the upper surface and the lower surface, and includes: a flat cutting edge formed at each of the corners in the upper surface and the lower surface that intersect with the side surface; and a first main cutting edge and a second main cutting edge formed between the corners in correspondence with the flat cutting edges, wherein an angle θ1 formed by the flat cutting edge and the first main cutting edge is smaller than an angle θ2 formed by the flat cutting edge and the second main cutting edge, a cutting edge angle α1 formed either by the upper surface and the side surface or by the lower surface and the side surface, both of which constitute the first main cutting edge, is an acute angle, and a cutting edge angle α2 formed either by the upper surface and the side surface or by the lower surface and the side surface, both of which constitute the second main cutting edge, is an obtuse angle.

In the configuration in which the cutting edge angle α1 formed either by the upper surface and the side surface or by the lower surface and the side surface, both of which constitute the first main cutting edge, is an acute angle, cutting resistance in cutting processing of a workpiece with the flat cutting edge and the first main cutting edge is reduced so that high-feed cutting processing can be more efficiently performed. On the other hand, in the configuration in which the cutting edge angle α2 formed either by the upper surface and the side surface or by the lower surface and the side surface, both of which constitute the second main cutting edge, is an obtuse angle, strength of the second main cutting edge is increased, and in performing cutting processing with deep slits in the axial direction, stable high-depth cutting processing can be performed without damage of the second main cutting edge.

In the cutting insert according to the present teaching, the cutting insert may have a substantially pentagonal flat shape.

In the cutting insert according to the present teaching, the angle θ1 formed by the flat cutting edge and the first main cutting edge may be in a range from 15° to 30°, and the angle θ2 formed by the flat cutting edge and the second main cutting edge may be in a range from 40° to 50°.

In the configuration in which the angle θ1 formed by the flat cutting edge and the first main cutting edge is in the range from 15° to 30°, a cutting resistance to the workpiece is reduced so that high-feed cutting processing can be more efficiently performed. On the other hand, in the configuration in which the angle θ2 formed by the flat cutting edge and the second main cutting edge is in the range from 40° to 50°, high-depth cutting processing with deep slits in the axial direction can be more efficiently performed with the second main cutting edge.

A cutting tool according to the present teaching includes the cutting insert described above attached to an insert pocket of a tool body.

In the cutting tool according to the present teaching, in the case of cutting a workpiece with the flat cutting edge and the first main cutting edge of the cutting insert without cutting the workpiece with the second main cutting edge, since the angle θ1 formed by the flat cutting edge and the first main cutting edge is small, a cutting resistance to the workpiece is reduced so that high-feed cutting processing can be thereby efficiently performed. On the other hand, in the case of cutting a workpiece with the flat cutting edge, the first main cutting edge, and the second main cutting edge of the cutting insert as described above, since the angle θ2 formed by the flat cutting edge and the second main cutting edge is larger than the angle θ1 formed by the flat cutting edge and the first main cutting edge, high-depth cutting processing with deep slits in the axial direction can be efficiently performed with the second main cutting edge.

In the cutting tool according to the present teaching, in attaching the cutting insert to the insert pocket of the tool body, the cutting insert may be restrained in the insert pocket by a first restraining portion and a second restraining portion, the first restraining portion is in contact with at least one of a side surface of the first main cutting edge or a side surface of the second main cutting edge on one side of one of the corners in the cutting insert, and the second restraining portion is in contact with at least one of a side surface of the first main cutting edge or a side surface of the second main cutting edge on another side of the one of the corners.

In restraining the cutting insert in the insert pocket by the first restraining portion and the second restraining portion as described above, when any of the first restraining portion and the second restraining portion are provided from the corner toward the tip of the tool body, the cutting insert is restrained toward the tip of the tool body by the first restraining portion and the second restraining portion, thereby suppressing a positional shift and other problems caused by rattles of the cutting insert in the insert pocket during cutting processing.

In the cutting tool according to the present teaching, in attaching the cutting insert in which the cutting edge angle α1 formed either by the upper surface and the side surface or by the lower surface and the side surface, both of which constitute the first main cutting edge, is an acute angle and the cutting edge angle α2 either formed by the upper surface and the side surface or by the lower surface and the side surface, both of which constitute the second main cutting edge, is an obtuse angle, to an insert pocket included in a tool body, the cutting insert may be restrained in the insert pocket by a first restraining portion and a second restraining portion, where the first restraining portion is in contact with a side surface of the second main cutting edge on one side of one of the corners in the cutting insert, and the second restraining portion is in contact with a side surface of the second main cutting edge on another side of the one of the corners.

When the cutting insert is restrained in the insert pocket by the first restraining portion and the second restraining portion as described above, the side surfaces of the second main cutting edge with the obtuse cutting edge angle α2 on both sides of the corner in the cutting insert are in contact with the first restraining portion and the second restraining portion, and the side surfaces of the second main cutting edge on both sides of the corner in the cutting insert are restrained while being pushed against the inner side of the insert pocket by the first restraining portion and the second restraining portion, thereby ensuring suppression of a positional shift and other problems caused by rattles of the cutting insert in the insert pocket during cutting processing.

### ADVANTAGEOUS EFFECTS OF INVENTION

As a cutting insert to be attached to an insert pocket of a tool body as described above, the present teaching uses a cutting insert including a polygonal upper surface, a polygonal lower surface, and a side surface between the upper surface and the lower surface and includes a flat cutting edge at each of the corners in the upper surface and the lower surface that intersect with the side surface and a first main cutting edge and a second main cutting edge formed between the corners in correspondence with the flat cutting edges, wherein an angle θ1 formed by the flat cutting edge and the first main cutting edge is smaller than an angle θ2 formed by the flat cutting edge and the second main cutting edge.

The present teaching also uses a cutting tool in which the cutting insert described above is attached to an insert pocket of a tool body. In the case of cutting a workpiece with the flat cutting edge and the first main cutting edge of the cutting insert without cutting the workpiece with the second main cutting edge, since the angle θ1 formed by the flat cutting edge and the first main cutting edge is small, a cutting resistance to the workpiece is reduced so that high-feed cutting processing can be efficiently performed, whereas in the case of cutting a workpiece with the flat cutting edge, the first main cutting edge, and the second main cutting edge of the cutting insert, since the angle θ2 formed by the flat cutting edge and the second main cutting edge is larger than the angle θ1 formed by the flat cutting edge and the first main cutting edge, high-depth cutting processing with deep slits in the axial direction can be efficiently performed with the second main cutting edge.

### BRIEF DESCRIPTION OF THE DRAWINGS

[FIG. 1] A schematic perspective view illustrating a cutting insert according to a first embodiment of the present teaching.
[FIG. 2] A schematic plan view illustrating the cutting insert of the first embodiment.
[FIG. 3] A schematic side view illustrating the cutting insert of the first embodiment.
[FIG. 4] A schematic view illustrating a cutting tool according to the first embodiment in which the cutting insert is attached to an insert pocket of a tool body.
[FIG. 5] A schematic partial view illustrating a state where the cutting insert is restrained in the insert pocket by a first restraining portion and a second restraining portion included in the insert pocket of the tool body in the cutting tool of the first embodiment.
[FIG. 6] A schematic partial view illustrating a state where cutting processing is performed on a workpiece with a flat cutting edge and a first main cutting edge included in the cutting insert in the cutting tool of the first embodiment.
[FIG. 7] A schematic partial view illustrating a state where cutting processing is performed on a workpiece with the flat cutting edge, the first main cutting edge, and a second main cutting edge included in the cutting insert in the cutting tool of the first embodiment.
[FIG. 8] A schematic perspective view illustrating a cutting insert according to a second embodiment of the present teaching.
[FIG. 9] A schematic plan view illustrating the cutting insert of the second embodiment.
[FIG. 10] A schematic side view illustrating the cutting insert of the second embodiment.
[FIG. 11] (A) is a partial cross-sectional view of a first main cutting edge with an acute cutting edge angle α1 and (B) is a partial cross-sectional view of a second main cutting edge with an obtuse cutting edge angle α2, in the cutting insert of the second embodiment.
[FIG. 12] A schematic view illustrating a cutting tool according to the second embodiment in which the cutting insert is attached to an insert pocket of a tool body.
[FIG. 13] A schematic partial view illustrating a state where the cutting insert is restrained in the insert pocket by a first restraining portion and a second restraining portion included in the insert pocket of the tool body in the cutting tool of the second embodiment.
[FIG. 14] A schematic partial view illustrating a state where cutting processing is performed on a workpiece with a flat cutting edge and a first main cutting edge included in the cutting insert in the cutting tool of the second embodiment.
[FIG. 15] A schematic partial view illustrating a state where cutting processing is performed on a workpiece with the flat cutting edge, the first main cutting edge, and a second main cutting edge included in the cutting insert in the cutting tool of the second embodiment.

### DETAILED DESCRIPTION

A cutting insert and a cutting tool according to embodiments of the present teaching will be specifically described hereinafter with reference to the accompanying drawings. The cutting insert and the cutting tool according to the present teaching are not limited to the embodiments below, and can be carried out with an appropriate change without departing from the gist of the teaching.

### FIRST EMBODIMENT

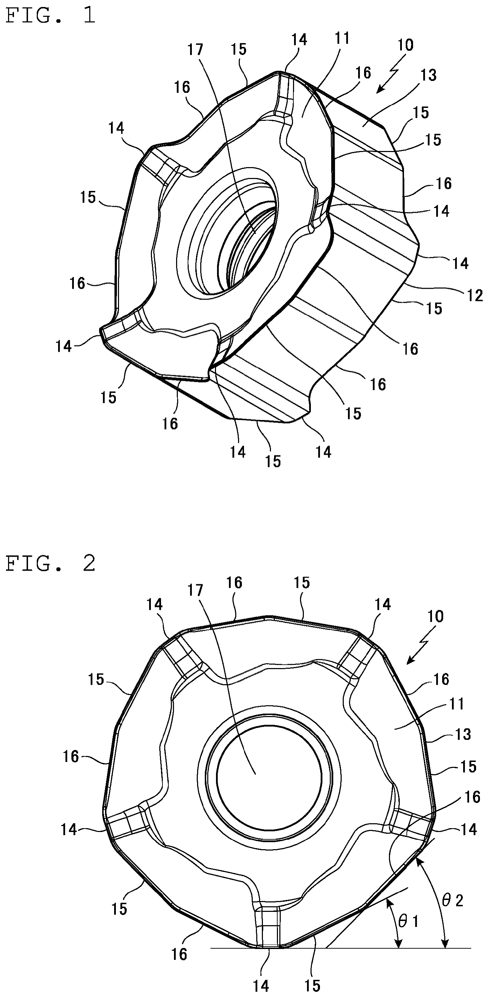

As illustrated in FIGS. 1 through 3, a cutting insert 10 used in a first embodiment includes a substantially pentagonal upper surface 11, a substantially pentagonal lower surface 12, and a side surface 13 between the upper surface 11 and the lower surface 12. In the cutting insert 10, a flat cutting edge 14 is formed at each of the corners in the upper surface 11 and the lower surface 12 that intersect with the side surface 13, a first main cutting edge 15 and a second main cutting edge 16 are formed between the corners in correspondence with the flat cutting edges 14, and an attachment hole 17 that penetrates a center portion of the upper surface 11 and the lower surface 12 is provided.

In the cutting insert 10, the upper surface 11 and the lower surface 12 are in a state of being reversed, and the second main cutting edge 16 is formed in a portion in which the lower surface 12 and the side surface 13 intersect with each other, which corresponds to a portion of the first main cutting edge 15 where the upper surface 11 and the side surface 13 intersect with each other, and the first main cutting edge 15 is formed in a portion in which the lower surface 12 and the side surface 13 intersect with each other, which corresponds to a portion of the second main cutting edge 16 where the upper surface 11 and the side surface 13 intersect with each other. Although not shown, a cutting edge angle of the first main cutting edge 15 is equal to a cutting edge angle of the second main cutting edge 16.

In the cutting insert 10, as illustrated in FIG. 2, an angle θ1 formed by the flat cutting edge 14 and the first main cutting edge 15 is in the range from 15° to 30°, an angle θ2 formed by the flat cutting edge 14 and the second main cutting edge 16 is in the range from 40° to 50°, and the angle θ1 formed by the flat cutting edge 14 and the first main cutting edge 15 is smaller than the angle θ2 formed by the flat cutting edge 14 and the second main cutting edge 16.

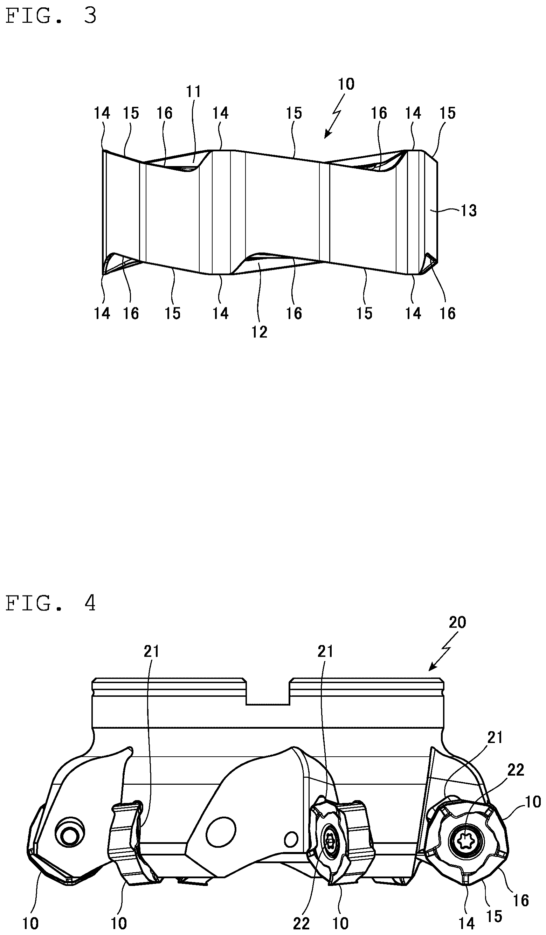

In the first embodiment, as illustrated in FIG. 4, the cutting insert 10 is attached to each insert pocket 21 provided in a tool body 20 with an attachment screw 22 through the attachment hole 17 of the cutting insert 10.

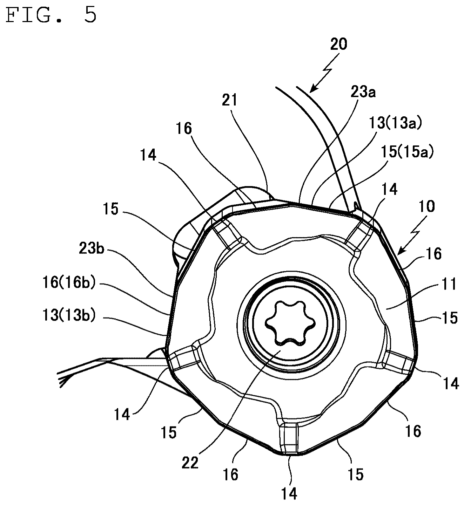

In attaching the cutting insert 10 to the insert pocket 21 in the tool body 20 with the attachment screw 22, as illustrated in FIG. 5, in the cutting insert 10 described above, on both sides of the corner with the flat cutting edge 14 located in an insert pocket 21 away from the corner with the flat cutting edge 14 that performs cutting, a first restraining portion 23a is provided in the insert pocket 21 and is in contact with the side surface 13 (13a) of the first main cutting edge 15 (15a) located closer to the outer periphery of the tool body 20 than the corner, a second restraining portion 23b is provided in the insert pocket 21 and is in contact with the side surface 13 (13b) of the second main cutting edge 16 (16b) located closer to the inner periphery of the tool body 20 than the corner, and the cutting insert 10 is restrained in the insert pocket 21 by the first restraining portion 23a and the second restraining portion 23b..

In the first embodiment, the first restraining portion 23a and the second restraining portion 23b on both sides of the corner with the flat cutting edge 14 located in the insert pocket 21 are tilted from the corner toward the tip of the tool body 20, and the cutting insert 10 is restrained toward the tip of the tool body 20. This can reduce a positional shift and other problems caused by rattles of the cutting insert 10 in the insert pocket 21 of the tool body 20 during cutting processing.

In the first embodiment, the first restraining portion 23a of the insert pocket 21 restrains the side surface 13 (13a) of the first main cutting edge 15 (15a) located closer to the outer periphery of the tool body 20 than the corner, and the second restraining portion 23b restrains the side surface 13 (13b) of the second main cutting edge 16 (16b) located closer to the inner periphery of the tool body 20 than the corner, as described above. However, the side surface 13 restrained by the first restraining portion 23a and the second restraining portion 23b is not limited to this configuration. For example, although not shown, the first restraining portion 23a may restrain the side surface 13 of the second main cutting edge 16 as well as the side surface 13 (13a) of the first main cutting edge 15 (15a) located closer to the outer periphery of the tool body 20 than the corner, and the second restraining portion 23b may restrain the side surface 13 of the first main cutting edge 15 as well as the side surface 13 (13b) of the second main cutting edge 16 (16b) located closer to the inner periphery of the tool body 20 than the corner.

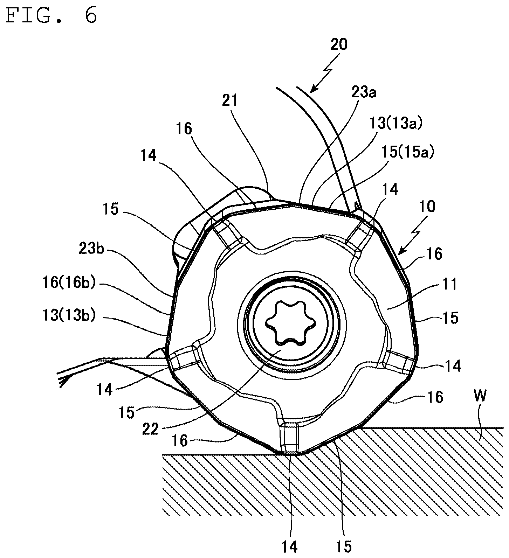

In the cutting tool of the first embodiment, as illustrated in FIG. 6, in the case of cutting a workpiece W with the flat cutting edge 14 and the first main cutting edge 15 in the corner of the cutting insert 10 projecting from the insert pocket 21 of the tool body 20 without cutting the workpiece W with the second main cutting edge 16, since the angle θ1 formed by the flat cutting edge 14 and the first main cutting edge 15 used for cutting the workpiece W is small, a cutting resistance to the workpiece W is reduced, and thus, high-feed cutting processing can be efficiently performed.

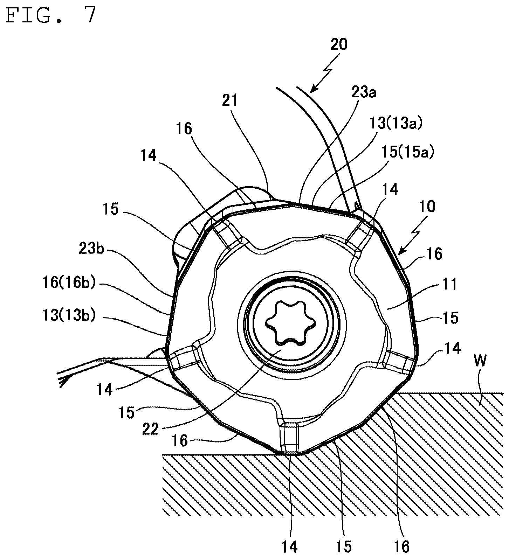

On the other hand, in the cutting tool of the first embodiment, as illustrated in FIG. 7, in the case of cutting a workpiece W with the flat cutting edge 14, the first main cutting edge 15, and the second main cutting edge 16a in the corner of the cutting insert 10 projecting from the insert pocket 21 of the tool body 20, since the angle θ2 formed by the flat cutting edge 14 and the second main cutting edge 16 is larger than the angle θ1 formed by the flat cutting edge 14 and the first main cutting edge 15, high-depth cutting processing can be performed efficiently with the second main cutting edge 16.

### SECOND EMBODIMENT

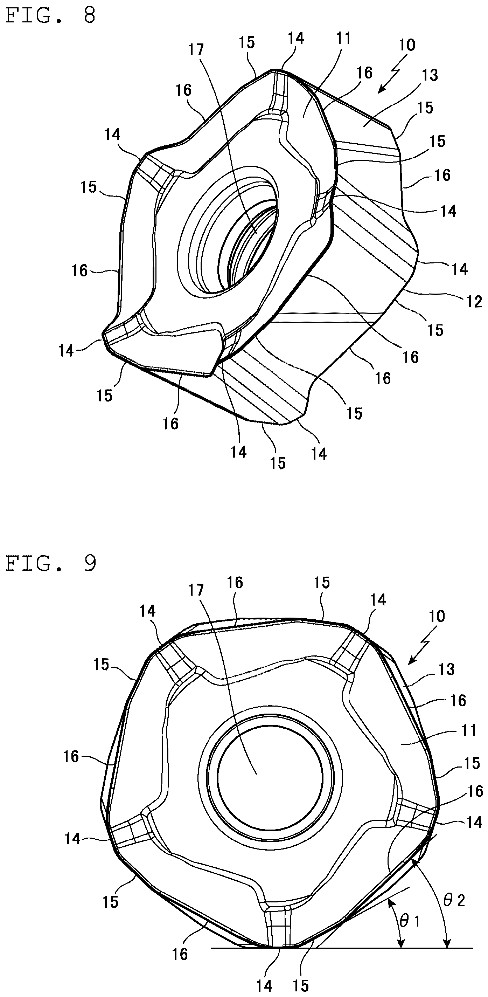

In a manner similar to the cutting insert 10 used in the first embodiment, as illustrated in FIGS. 8 through 10, a cutting insert 10 used in a second embodiment includes a substantially pentagonal upper surface 11, a substantially pentagonal lower surface 12, and a side surface 13 between the upper surface 11 and the lower surface 12. In the cutting insert 10, a flat cutting edge 14 is formed at each of the corners in the upper surface 11 and the lower surface 12 that intersect with the side surface 13, a first main cutting edge 15 and a second main cutting edge 16 are formed between the corners in correspondence with the flat cutting edges 14, and an attachment hole 17 that penetrates a center portion of the upper surface 11 and the lower surface 12 is provided.

In the cutting insert 10, the upper surface 11 and the lower surface 12 are in a state of being reversed, and the second main cutting edge 16 is formed in a portion in which the lower surface 12 and the side surface 13 intersect with each other, which corresponds to a portion of the first main cutting edge 15 where the upper surface 11 and the side surface 13 intersect with each other, and the first main cutting edge 15 is formed in a portion in which the lower surface 12 and the side surface 13 intersect with each other, which corresponds to a portion of the second main cutting edge 16 where the upper surface 11 and the side surface 13 intersect with each other.

In the cutting insert 10, as illustrated in FIG. 2, an angle θ1 formed by the flat cutting edge 14 and the first main cutting edge 15 is in the range from 15° to 30°, an angle θ2 formed by the flat cutting edge 14 and the second main cutting edge 16 is in the range from 40° to 50°, and the angle θ1 formed by the flat cutting edge 14 and the first main cutting edge 15 is smaller than the angle θ2 formed by the flat cutting edge 14 and the second main cutting edge 16.

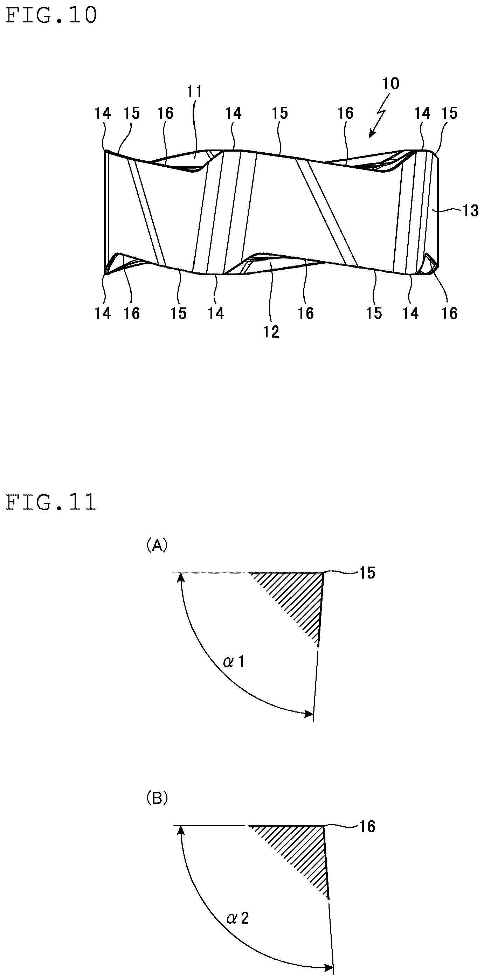

On the other hand, in the cutting insert 10 used in the second embodiment, as illustrated in FIGS. 11(A) and (B), the first main cutting edge 15 has an acute cutting edge angle α1, whereas the second main cutting edge 16 has an obtuse cutting edge angle α2.

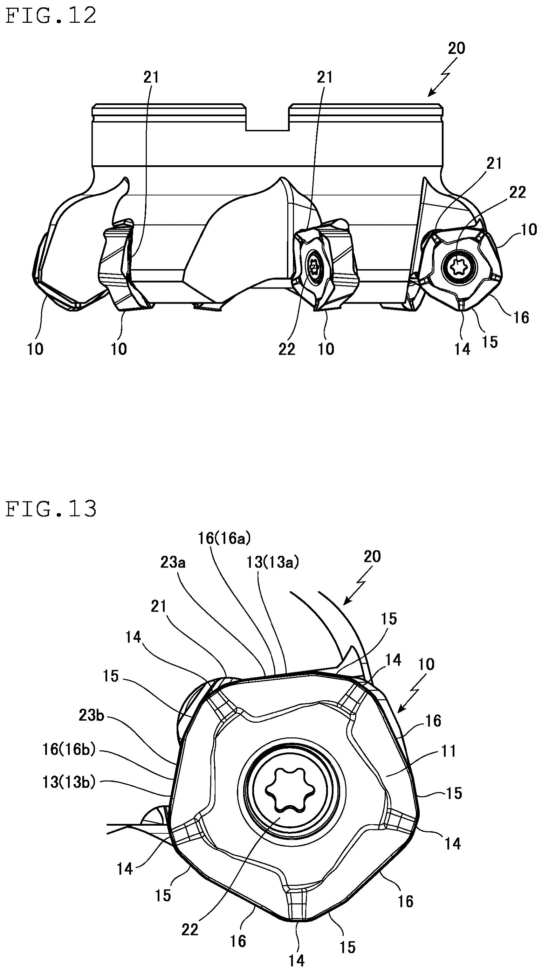

In the second embodiment, as illustrated in FIG. 12, the cutting insert 10 is attached to each insert pocket 21 provided in a tool body 20 with an attachment screw 22 through the attachment hole 17 of the cutting insert 10.

In attaching the cutting insert 10 to the insert pocket 21 provided in the tool body 20 with the attachment screw 22, as illustrated in FIG. 13, in a state where the cutting insert 10 is set to the insert pocket 21, the cutting insert 10 is attached such that the side surface 13 of the second main cutting edge 16, having the obtuse cutting edge angle α2 and being continuous with the flat cutting edge 14 and the first main cutting edge 15 at the cutting position, does not project toward the outer periphery, preventing damage of the workpiece W and the cutting insert 10 caused by contact of the side surface 13 of the second main cutting edge 16 with the workpiece W during cutting of the workpiece W.

In attaching the cutting insert 10 to the insert pocket 21 provided in the tool body 20 with the attachment screw 22, in order to suppress positional shift and other problems caused by rattles of the cutting insert 10 in the insert pocket 21 of the tool body 20 during cutting processing, on both sides of the corner with the flat cutting edge 14 located in the insert pocket 21 away from the corner with the flat cutting edge 14 that performs cutting, the first restraining portion 23a is provided in the insert pocket 21 and is in contact with the side surface 13 (13a) of the second main cutting edge 16 (16a) located closer to the outer periphery of the tool body 20 than the corner, the second restraining portion 23b is provided in the insert pocket 21 and is in contact with the side surface 13 (13b) of the second main cutting edge 16 (16b) located closer to the inner periphery of the tool body 20 than the corner, and the cutting insert 10 is restrained in the insert pocket 21 by the first restraining portion 23a and the second restraining portion 23b .

Here, in the configuration in which the cutting insert 10 is restrained in the insert pocket 21 as described above, the side surfaces 13 (13a) and 13 (13b) of the second main cutting edges 16 (16a) and 16 (16b) each having an obtuse cutting edge angle α2 on both sides of the corner in the insert pocket 21 respectively contact the first restraining portion 23a and the second restraining portion 23b, and the side surfaces 13 (13a) and 13 (13b) of the second main cutting edges 16 (16a) and 16 (16b) on both sides of the corner are restrained by the first restraining portion 23a and the second restraining portion 23b while being pushed against the inner side of the insert pocket 21, thereby suppressing a positional shift and other problems caused by rattles of the cutting insert 10 in the insert pocket 21 during cutting processing.

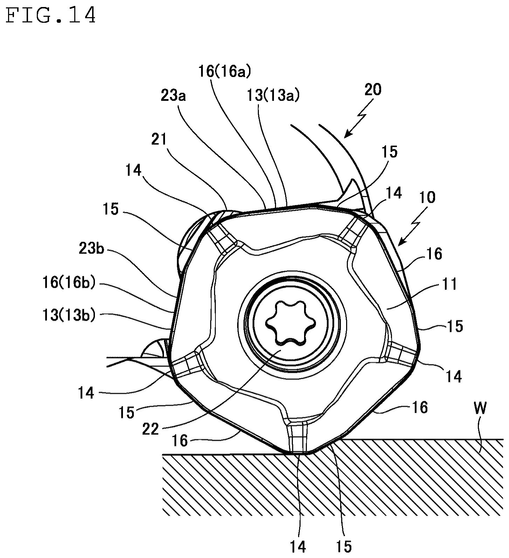

In the cutting tool of the second embodiment, as illustrated in FIG. 14, in the case of cutting a workpiece W with the flat cutting edge 14 at the corner of the cutting insert 10 and the first main cutting edge 15 of the cutting insert 10 projecting from the insert pocket 21 of the tool body 20 without cutting the workpiece W with the second main cutting edge 16, since the angle θ1 formed by the flat cutting edge 14 and the first main cutting edge 15 used for cutting the workpiece W is small, and the cutting edge angle α1 of the first main cutting edge 15 is an acute angle, a cutting resistance to the workpiece W is reduced, and high-feed cutting processing can be efficiently performed.

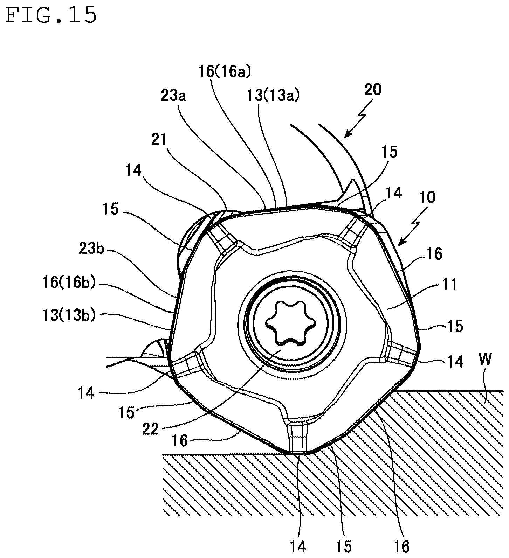

On the other hand, in the cutting tool of the first embodiment, as illustrated in FIG. 15, in the case of cutting a workpiece W with the flat cutting edge 14 formed at the corner of the cutting insert 10, the first main cutting edge 15, and the second main cutting edge 16of the cutting insert 10 projecting from the insert pocket 21 of the tool body 20, since the angle θ2 formed by the flat cutting edge 14 and the second main cutting edge 16 is larger than the angle θ1 formed by the flat cutting edge 14 and the first main cutting edge 15, high-depth cutting processing can be efficiently performed with the second main cutting edge 16. In addition, since the cutting edge angle α2 of the second main cutting edge 16 is an obtuse angle, the second main cutting edge 16 has high edge strength, thus preventing damage of the second main cutting edge 16.

### REFERENCE SIGNS LIST

1: tool body
10: cutting insert
11: upper surface
12: lower surface
13: side surface
14: flat cutting edge
15: first main cutting edge
16: second main cutting edge
17: attachment hole
20: tool body
21: insert pocket
22: attachment screw
23a: first restraining portion
23b: second restraining portion
W: workpiece
α1: cutting edge angle of first main cutting edge
α2: cutting edge angle of second main cutting edge
θ1: angle formed by flat cutting edge and first main cutting edge
θ2: angle formed by flat cutting edge and second main cutting edge

## Claims

1. A cutting insert including a substantially pentagonal upper surface, a substantially pentagonal lower surface, and a side surface between the upper surface and the lower surface, the cutting insert comprising:
a flat cutting edge formed at each of the corners in the upper surface and the lower surface that intersect with the side surface; and
a first main cutting edge and a second main cutting edge formed between the corners and continuous with the flat cutting edges, wherein
an angle θ1 formed by the flat cutting edge and the first main cutting edge is smaller than an angle θ2 formed by the flat cutting edge and the second main cutting edge,
the angle θ1 formed by the flat cutting edge and the first main cutting edge is in a range from 15° to 30°, and
the angle θ2 formed by the flat cutting edge and the second main cutting edge is in a range from 40° to 50°.

2. A cutting insert including a polygonal upper surface, a polygonal lower surface, and a side surface between the upper surface and the lower surface, the cutting insert comprising:
a flat cutting edge formed at each of the corners in the upper surface and the lower surface that intersect with the side surface; and
a first main cutting edge and a second main cutting edge formed between the corners in correspondence with the flat cutting edges, wherein
an angle θ1 formed by the flat cutting edge and the first main cutting edge is smaller than an angle θ2 formed by the flat cutting edge and the second main cutting edge,
a cutting edge angle α1 formed either by the upper surface and the side surface or by the lower surface and the side surface, both of which constitute the first main cutting edge, is an acute angle, and
a cutting edge angle α2 formed by the upper surface and the side surface or by the lower surface and the side surface, both of which constitute the second main cutting edge, is an obtuse angle.

3. The cutting insert according to claim 2, wherein the cutting insert has a substantially pentagonal shape.

4. The cutting insert according to claim 2, wherein
the angle θ1 formed by the flat cutting edge and the first main cutting edge is in a range from 15° to 30°, and
the angle θ2 formed by the flat cutting edge and the second main cutting edge is in a range from 40° to 50°.

5. A cutting tool, comprising the cutting insert according to claim 1 or 2 attached to an insert pocket included in a tool body.

6. The cutting tool according to claim 5, wherein in attaching the cutting insert to the insert pocket of the tool body, the cutting insert is restrained in the insert pocket by a first restraining portion and a second restraining portion, the first restraining portion being in contact with at least one of a side surface of the first main cutting edge or a side surface of the second main cutting edge on one side of one of the corners in the cutting insert, and the second restraining portion being in contact with at least one of a side surface of the first main cutting edge or a side surface of the second main cutting edge on another side of the one of the corners.

7. A cutting tool comprising the cutting insert according to claim 2 attached to an insert pocket included in a tool body, wherein the cutting insert is restrained in the insert pocket by a first restraining portion and a second restraining portion, the first restraining portion being in contact with a side surface of the second main cutting edge on one side of one of the corners in the cutting insert, and the second restraining portion being in contact with a side surface of the second main cutting edge on another side of the one of the corners.
